# EUROPEAN PATENT APPLICATION

(11) **EP 2 887 205 A1**
(43) Date of publication of application: **24.06.2015**
(21) Application number: 13197645.8
(22) Date of filing: 17.12.2013
(51) Int. Cl.: G06F 3/16, G06F 3/01, G10L 15/22

(54) **Voice activated device, method & computer program product**

(71) Applicant: Sony Corporation, Tokyo 108-0075 (JP)
(72) Inventor: Andersson, Henrik B., 224 72 Lund (SE)
(74) Representative: Lindgren, Sven Erik Andreas

(57) **Abstract**

Device (10) comprising a voice-activated control unit (12) that allows said device (10) to be controlled by means of a voice command (14) and a sound input unit configured to detect a voice command (14). The device (10) comprises at least one sensor (16) that is configured to determine whether a user (18) of said device (10) is speaking when said voice command (14) is issued, whereby said voice-activated control unit (12) is configured to process said voice command (14) only if said at least one sensor (16) determines that said user (18) is speaking when said voice command (14) is issued.

## Description

### TECHNICAL FIELD

The present invention concerns a device comprising a voice-activated control unit that allows the device to be controlled by means of a voice command. The present invention also concerns a method and computer program product for controlling such a device by means of a voice command.

### BACKGROUND OF THE INVENTION

There are currently many devices that comprise a voice-activated control unit that allows the device to be controlled by means of a voice command. By removing the need to use tangent keys, buttons, dials and switches, users of such devices can easily operate the devices with their hands full or while doing other tasks.

A lot of communication devices such mobile telephones, media players, Personal Communications System (PCS) terminals, Personal Data Assistants (PDA), laptop computers, palmtop receivers, tablet computers and Google Glass™ comprise a headset that a user can speak a voice command into. A user can for example command his/her mobile telephone to call someone or request that his/her Google Glass™ takes a picture by issuing a voice command.

A problem with devices that comprise a voice-activated control unit is that someone other than a user of a device can control the device with the same voice command.

### SUMMARY OF THE INVENTION

An object of the invention is to provide an improved device comprising a voice-activated control unit that allows the device to be controlled by means of a voice command.

This object is achieved by a device comprising a sound input unit configured to detect a voice command, such as a word or words spoken by a human being, and at least one sensor that is configured to determine whether a user of the device is speaking when the voice command is issued, whereby the voice-activated control unit is configured to process the voice command, i.e. to make the device carry out that which has been requested, only if the at least one sensor determines that the user is speaking when the command is issued.

Such a device ensures that only the user or users of a device can control the device by means of voice commands and the same voice command issued from someone other than the user(s) of the device will be ignored.

According to an embodiment of the invention the device comprises a headset, headphones or an earpiece comprising the at least one sensor, i.e. one or more of the sensors for determining whether a user of a device is speaking when a voice command is issued may be located in a headset, headphones or an earpiece of a device.

According to another embodiment of the invention the at least one sensor comprises at least one of the following sensors: an optic sensor, such as a camera, or a humidity sensor and/or a carbon dioxide sensor to detect a user's breathing pattern or a motion sensor.

The at least one sensor may be configured to determine whether the user's mouth is moving when a voice command is issued. The expression "user's mouth" is intended to mean any part of a user's mouth, such as a user's lips, teeth, or any other part of a user's body which moves when a the user is speaking, such as the user's jaws or facial features.

The motion sensor may be any type of sensor that detects motion. For example a motion sensor may be an optic sensor, such as a camera, whereby image analysis of at least one image taken by the camera may be used to determine that a user of a device is speaking when a command is issued. A motion sensor may be an ultrasonic sensor that sends out pulses of ultrasonic waves (acoustic sound waves above the frequency that a human can hear) and measures their reflection off a moving object, such as a user's lips, teeth, jaws or facial features etc. Motion causes the frequency of the reflected wave to change (Doppler effect). A motion sensor may also be a microphone that is configured to detect sound only within a predetermined distance therefrom. A motion sensor may also be a vibration sensor, such as a piezoelectric sensor that is configured to convert mechanical vibration into an electric signal.

According to a further embodiment of the invention the at least one motion sensor may configured to be placed in contact with the head, neck or body of a user when the device is in use so as to be able to detect vibrations in the head, neck or body of the user caused by the user issuing a voice command. When a user speaks, sound is namely transported through his/her body and this sound will make the user's head and body vibrate. A motion sensor placed in contact with the head, neck or body of a user is able to detect these vibrations. For example, at least one motion sensor may be adapted to be arranged behind, or close to an ear of the user when the device is in use, where the vibrations may be relatively strong.

According to another embodiment of the invention the device is constituted at least in part by at least one of the following: a mobile telephone, media player, Personal Communications System (PCS) terminal, Personal Data Assistant (PDA), laptop computer, palmtop receiver, tablet computer, Google Glass™, vehicle, household appliance, television, acoustic or video equipment, Bluetooth headset or earpiece or any other device or object comprising a Bluetooth chip.

The present invention also concerns a method for controlling a device comprising a voice-activated control unit that allows the device to be controlled by means of a voice command. The method comprises the steps of the device detecting that a voice command is issued, determining whether a user of the device is speaking when the voice command is issued using at least one sensor, and processing the voice command only if the user is speaking when the command is issued.

According to an embodiment of the invention the method comprises the step of providing the device with a headset, headphones or an earpiece comprising the at least one sensor to determine whether a user of the device is speaking when the voice command is issued.

According to another embodiment of the invention the at least one sensor comprises at least one motion sensor. According to a further embodiment of the invention the method comprises the step of determining whether the user is speaking by determining whether the user's mouth is moving when a voice command is issued using the at least one motion sensor.

According to an embodiment of the invention the method comprises the step of determining whether the user is speaking by detecting vibrations caused by the user issuing a voice command in the head, neck or body of the user using the at least one motion sensor.

According to another embodiment of the invention the at least one sensor comprises at least one of the following sensors: an optic sensor, such as a camera, a humidity sensor, a carbon dioxide sensor.

The present invention also concerns a computer program product that comprises a computer program containing computer program code means arranged to cause a computer or a processor to execute the steps of a method according to any of the embodiments of the invention stored on a computer-readable medium or a carrier wave. Such a computer program product may be incorporated in a device, or in a voice-activated control unit, headset, headphones or earpiece of a device, or in another local or remote device or component, such as a database, connected to the device in a wireless and/or wired manner.

### BRIEF DESCRIPTION OF THE DRAWINGS

The present invention will hereinafter be further explained by means of non-limiting examples with reference to the appended schematic figures where;
- Figures 1 & 2: show devices according to an embodiment of the invention, and
- Figure 3: is a flow diagram showing the steps of a method according to an embodiment of the invention.

It should be noted that the drawings have not been drawn to scale and that the dimensions of certain features have been exaggerated for the sake of clarity.

### DETAILED DESCRIPTION OF EMBODIMENTS

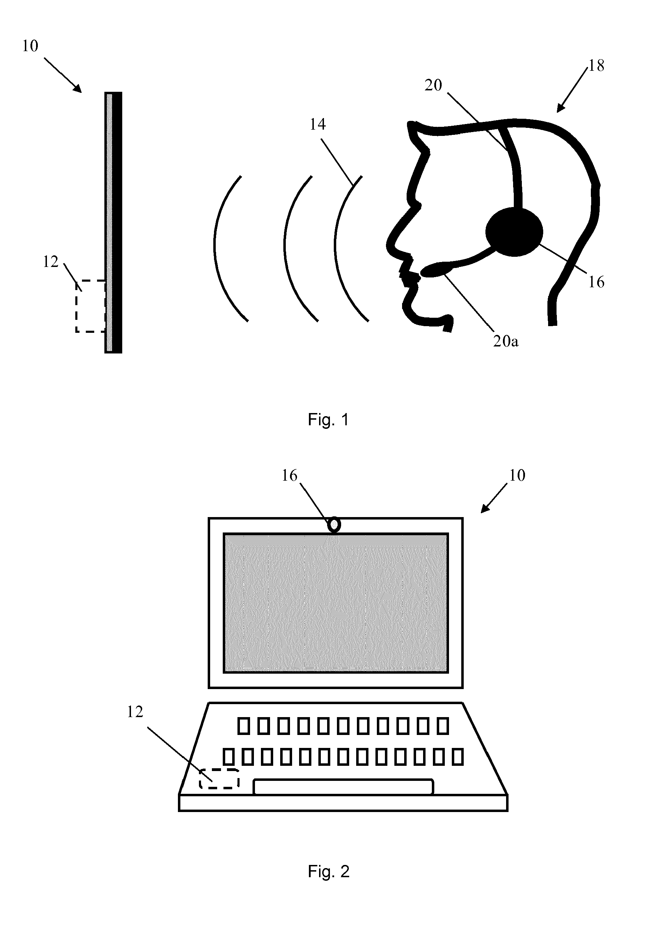

Figure 1 shows a device 10, such as a display unit, comprising a voice-activated control unit 12 that allows the device to be controlled by means of a voice command 14. The device 10 comprises a sound input unit configured to detect a voice command 14 and at least one sensor 16 that is configured to determine whether a user 18 of the device 10 is speaking when the voice command 16 is issued, whereby the voice-activated control unit 12 is configured to process the voice command 14 only if the at least one sensor16 determines that the user 18 is speaking when the voice command 14 is issued.

The voice-activated control unit 12 and sound input unit and optionally at least one sensor 16 may be integrally formed as a single unit or may be constituted by a plurality of units located in any suitable location(s) which are connected to each other in a wireless and/or wired manner.

In the embodiment illustrated in figure 1, the device 10 comprises a headset 20, such as a Bluetooth headset, which comprises the at least one sensor 16. The device 10 may also comprise headphones, an earpiece or any other component or object that allows at least one sensor 16 to be placed in a suitable position on or around the body of a user 18 of a device 10 to determine that the user 18 of the device 10 is speaking when a voice command 14 is issued.

In the embodiment illustrated in figure 1, the at least one sensor 16 comprises at least one motion sensor that is configured to be placed in contact with the head, neck or body of the user 18 when the device 10 is in use so as to be able to detect vibrations in the head, neck or body of the user 18 caused by the user 18 issuing a voice command 14. In the embodiment illustrated in figure 1, the motion sensor 16 is adapted to be arranged behind, or close to an ear of the user 18 when the device 18 is in use, namely when the user 18 puts the headset 20 on his head. Alternatively, or additionally at least one sensor may also be placed in/on or around the mouthpiece or microphone 20a of the headset 20 in order to determine whether the user's mouth is moving when a voice command 14 is issued.

It should be noted that a sensor need not necessarily be located on or in contact with a user's head, neck or body. At least one sensor may be provided in the device 10 itself or provided in the vicinity of the device or in the vicinity of a user 18 of the device.

Figure 2 shows a device 10, namely a laptop computer, comprising an optic sensor 16, namely a camera that may be arranged to capture at least one image of a user 18 of the device. The device 10 also comprises a voice-activated control unit 12 including a sound input unit configured to detect a voice command 14. The voice-activated control unit 12, on detecting a voice command 14 may be arranged to analyse the at least one image from the camera 16 and/or one or more sensors in order to determine whether a user 18 of the device 10 is speaking when the voice command 14 is issued. The voice command is processed only if it is determined that the user 18 of the device 10 is speaking when said voice command 14 is issued, otherwise the voice command is assumed to have been issued by someone other than the user 18 of the device 10 and is thereby ignored.

A device 10 may be configured to determine that a user 18 of a device 10 is a person in the proximity of a device 10, or a person who's eyes are directed towards a display unit of a device 10, a person in the driver's seat of a vehicle, or a person wearing a headset 20, headphones or earpiece or other component comprising at least one sensor 16 constituting part of the device 10.

A device 10 according to the present invention may comprise at least one of any of the following sensors for determining whether a user 18 of a device 10 is speaking when a voice command 14 is issued: an optic sensor, such as a camera, a humidity sensor, a carbon dioxide sensor. The device 10 may also comprise at least one sensor, such as an optic sensor, a humidity sensor, a carbon dioxide sensor, proximity sensor, an infrared sensor etc. in order to determine who the user or users of a device 10 is/are. At least one sensor 16 for determining whether a user 18 of a device 10 is speaking when a voice command 14 is issued may then be focused on the person or persons considered to be users 18 of the device 10.

The device 10 may be is constituted at least in part by at least one of the following: a mobile telephone, media player, Personal Communications System (PCS) terminal, Personal Data Assistant (PDA), laptop computer, palmtop receiver, tablet computer, Google Glass™, Bluetooth headset or earpiece or any other device or object comprising a Bluetooth chip, vehicle, household appliance, such as a washing machine, a dishwasher, a coffee machine, television, DVD, acoustic or video equipment or any other device or object that comprises a voice-activated control unit that allows the device or object to be controlled by means of a voice command.

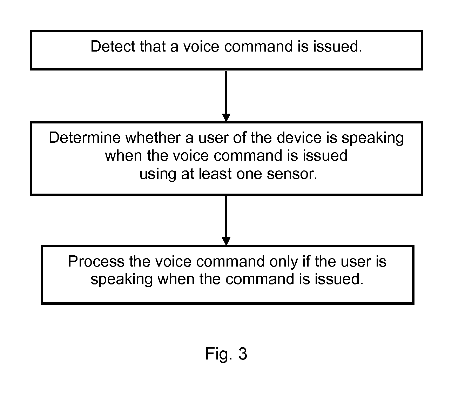

Figure 3 shows the steps of a method for controlling a device comprising a voice-activated control unit that allows the device to be controlled by means of a voice command according to an embodiment of the present invention. The method comprises the steps of the device detecting that a voice command is issued, determining whether a user of the device is speaking when the voice command is issued using at least one sensor, and processing the voice command only if the user is speaking when the voice command is issued. A device according to any of the embodiments of the present invention may be used to carry out the steps of such a method.

The method may comprise the step of providing the device with a headset, headphones or an earpiece comprising the at least one sensor to determine whether a user of the device is speaking when the voice command is issued. The at least one sensor should be adapted to become located in a suitable position for such as determination once the headset, headphones or earpiece have been placed in their correct position on a user of the device. A motion sensor may namely be adapted to be placed in contact with the body of a user behind or around the ear of the user so that vibrations caused by the user issuing a voice command in the head, neck or body of the user may be detected using the at least one motion sensor.

Further modifications of the invention within the scope of the claims would be apparent to a skilled person.

## Claims

1. Device (10) comprising a voice-activated control unit (12) that allows said device (10) to be controlled by means of a voice command (14) and a sound input unit configured to detect a voice command (14), **characterized in that** it comprises at least one sensor (16) that is configured to determine whether a user (18) of said device (10) is speaking when said voice command (14) is issued, whereby said voice-activated control unit (12) is configured to process said voice command (14) only if said at least one sensor (16) determines that said user (18) is speaking when said voice command (14) is issued.

2. Device (10) according to claim 1, **characterized in that** said device (10) comprises a headset (20), headphones or an earpiece comprising said at least one sensor (16).

3. Device (10) according to claim 1 or 2, **characterized in that** said at least one sensor (16) comprises at least one motion sensor (16).

4. Device (10) according to claim 3, **characterized in that** said at least one motion sensor (16) is configured to determine whether said user (18)'s mouth is moving when a voice command (14) is issued.

5. Device (10) to any claim 3 or 4, **characterized in that** said at least one motion sensor (16) is configured to be placed in contact with the head, neck or body of a user (18) when said device (10) is in use so as to be able to detect vibrations in said head, neck or body caused by said user (18) issuing a voice command (14).

6. Device (10) according to claim 5, **characterized in that** said at least one motion sensor (16) is adapted to be arranged behind, or close to an ear of said user (18) when said device (10) is in use.

7. Device (10) according to any of the preceding claims, **characterized in that** said at least one sensor (16) comprises at least one of the following sensors: an optic sensor, such as a camera, a humidity sensor, a carbon dioxide sensor.

8. Device (10) according to any of the preceding claims, **characterized in that** it is constituted at least in part by at least one of the following: a mobile telephone, media player, Personal Communications System (PCS) terminal, Personal Data Assistant (PDA), laptop computer, palmtop receiver, tablet computer, Google Glass™, Bluetooth headset or earpiece or any other device or object comprising a Bluetooth chip, vehicle, household appliance, television, acoustic or video equipment.

9. Method for controlling a device (10) comprising a voice-activated control unit (12) that allows said device (10) to be controlled by means of a voice command (14), **characterized by** said device (10): detecting that a voice command (14) is issued, determining whether a user (18) of said device (10) is speaking when said voice command (14) is issued using at least one sensor (16), and processing said voice command (14) only if said user (18) is speaking when said voice command (14) is issued.

10. Method according to claim 9, **characterized by** it comprises the step of providing said device (10) with a headset (20), headphones or an earpiece comprising said at least one sensor (16) to determine whether a user (18) of said device (10) is speaking when said voice command (14) is issued.

11. Method according to claim 9 or 10, **characterized by** said at least one sensor (16) comprising at least one motion sensor (16).

12. Method according to claim 11, **characterized by** it comprises the step of determining whether said user (18) is speaking by determining whether said user (18)'s mouth is moving when a voice command (14) is issued using said at least one motion sensor (16).

13. Method to according to claim 11 or 12, **characterized by** it comprises the step of determining whether said user (18) is speaking by detecting vibrations caused by said user (18) issuing a voice command (14) in the head, neck or body of said user (18) using said at least one motion sensor (16).

14. Method according to any of claims 9-13, **characterized by** said at least one sensor (16) comprising at least one of the following sensors: an optic sensor, such as a camera, a humidity sensor, a carbon dioxide sensor.

15. Computer program product, **characterized by** it comprises a computer program containing computer program code means arranged to cause a computer or a processor to execute the steps of a method according to any of claims 9-14, stored on a computer-readable medium or a carrier wave.

## Amended claims

### Amended claims in accordance with Rule 137(2) EPC.

1. An arrangement for voice controlling of a device (10), the arrangement comprising
a voice-activated control unit (12) that allows said device (10) to be controlled by means of a voice command (14),
a sound input unit configured to detect a voice command (14), and
at least one sensor (16) that, upon detection by the sound input unit that the voice command (14) is issued, is configured to determine whether a user (18) of said device (10) is speaking,
whereby said voice-activated control unit (12) is configured to process said voice command (14) only if said at least one sensor (16), upon detection by the sound input unit that the voice is issued, determines that said user (18) is speaking **characterized in that** said at least one sensor (16) comprises at least one motion sensor.

2. The arrangement according to claim 1, **characterized in that** said arrangement comprises a headset (20), headphones or an earpiece comprising said at least one sensor (16).

3. The arrangement according to claim 1 or 2, **characterized in that** said at least one motion sensor (16) is configured to determine whether said user (18)'s mouth is moving when a voice command (14) is issued.

4. The arrangement according to any one of claims 1-3, **characterized in that** said at least one motion sensor (16) is configured to be placed in contact with the head, neck or body of a user (18) when said arrangement is in use so as to be able to detect vibrations in said head, neck or body caused by said user (18) issuing a voice command (14).

5. The arrangement according to claim 4, **characterized in that** said at least one motion sensor (16) is adapted to be arranged behind, or close to an ear of said user (18) when said arrangement is in use.

6. The arrangement according to any of the preceding claims, **characterized in that** said at least one sensor (16) comprises at least one of the following sensors: an optic sensor, such as a camera, a humidity sensor, a carbon dioxide sensor.

7. The arrangement according to any of the preceding claims, **characterized in that** the device (10) is constituted at least in part by at least one of the following: a mobile telephone, media player, Personal Communications System (PCS) terminal, Personal Data Assistant (PDA), laptop computer, palmtop receiver, tablet computer, Google Glass^{™}, Bluetooth headset or earpiece or any other device or object comprising a Bluetooth chip, vehicle, household appliance, television, acoustic or video equipment.

8. A method for controlling an arrangement comprising a voice-activated control unit (12) that allows a device (10) to be controlled by means of a voice command (14), said method comprising the steps of:
detecting, by a sound input device, that a voice command (14) is issued,
determining, upon detection of that said voice command (14) is issued, whether a user (18) of said device (10) is speaking using at least one motion sensor (16), and
processing said voice command (14) only if said user (18) is speaking upon detection of that said voice command (14) is issued.

9. The method according to claim 8, further comprising the step of providing said arrangement with a headset (20), headphones or an earpiece comprising said at least one motion sensor (16) to determine whether a user (18) of said device (10) is speaking when said voice command (14) is issued.

10. The method according to claim 8 or 9, further comprising the step of determining whether said user (18) is speaking by determining whether said user (18)'s mouth is moving when a voice command (14) is issued using said at least one motion sensor (16).

11. The method to according to any of claims 8-10, further comprising the step of determining whether said user (18) is speaking by detecting vibrations caused by said user (18) issuing a voice command (14) in the head, neck or body of said user (18) using said at least one motion sensor (16).

12. The method according to any of claims 8-11, wherein said at least one motion sensor (16) comprising at least one of the following sensors: an optic sensor, such as a camera, a humidity sensor, a carbon dioxide sensor.

13. Computer program product, **characterized by** it comprises a computer program containing computer program code means arranged to cause a computer or a processor to execute the steps of a method according to any of claims 8-12, stored on a computer readable medium or a carrier wave.
